**Europäisches Patentamt**

**European Patent Office**

**Office européen des brevets**

(19)

(11) Numéro de publication : **0 357 520 B1**

(12)

# FASCICULE DE BREVET EUROPEEN

(45) Date de publication du fascicule du brevet :
**13.05.92 Bulletin 92/20**

(51) Int. Cl.⁵ : **E03B 9/20,** F04B 47/02,
C02F 1/68

(21) Numéro de dépôt : **89420272.0**

(22) Date de dépôt : **25.07.89**

(54) **Fontaine à niveau constant permettant le relargage de substances actives dans l'eau soutirée de forages.**

(30) Priorité : **29.07.88 FR 8810537**

(43) Date de publication de la demande :
**07.03.90 Bulletin 90/10**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**FR-A- 1 070 350**
**FR-A- 1 214 044**
**GB-A- 2 158 162**
**US-A- 1 757 140**

(73) Titulaire : **RHONE-POULENC CHIMIE
25, quai Paul Doumer
F-92408 Courbevoie Cédex (FR)**

(72) Inventeur : **Arnold, Jean-Claude
13, rue Pierre-Louvrier
F-92140 Clamart (FR)**
Inventeur : **Cyprien, Guy
7, rue d'Anjou
F-94240 L'Hay-les-Roses (FR)**
Inventeur : **Olivere, Jean-François
136, avenue St-Michel
F-45160 Olivet (FR)**

(74) Mandataire : **Fabre, Madeleine-France et al
RHONE-POULENC CHIMIE Direction des
Brevets Secteur Spécialités Chimiques 25,
quai Paul-Doumer
F-92408 Courbevoie Cédex (FR)**

Jouve, 18, rue Saint-Denis, 75001 PARIS

**Description**

La présente invention se rapporte à une fontaine de conception particulière permettant le relargage de substance(s) active(s) dans l'eau soutirée de forages.

Il est particulièrement intéressant, plus spécialement dans des pays tels que notamment ceux de l'Amérique latine, les pays non côtiers de l'Afrique et de l'Asie (Pakistan, Inde, Népal, Chine, Laos, etc...), en Australie, de pouvoir pallier aux carences en iode de certaines populations villageoises s'alimentant par exemple à partir de pompes. Ces pompes sont généralement mises en oeuvre manuellement ou à l'aide d'animaux (noria). Parfois ces pompes peuvent fonctionner grâce à l'énergie électrique obtenue à partir du soleil (énergie photo voltaïque).

Il est en effet possible de corriger les carences en iode de certaines populations en introduisant, dans l'eau soutirée de forage, une "cartouche" contenant un composé organique et/ou minéral de l'iode dans un support à base par exemple de silicone. De tels produits sont brevetés dans les demandes de brevets français 87/02 882, 87/02 883 et 87/02 884 de la Société Rhône-Poulenc. Dans le cas particulier de cette application on considère que la substance active relarguée est le composé iodé.

Or il s'est avéré que les fontaines actuellement connues (par exemple par le GB-A-2 158 162) ne permettent pas le relargage aisé et contrôlé de substance(s) active(s) dans l'eau soutirée de forages à l'aide de pompes, étant entendu que la fontaine est généralement considérée comme la partie d'une pompe à l'extérieur du forage et permettant le déversement de l'eau soutirée grâce à un bec verseur.

Ainsi un but de la présente invention est plus particulièrement une fontaine conçue pour le relargage de substances actives dans l'eau en provenance de forages.

Un autre but de la présente invention est une fontaine dans laquelle il est possible d'introduire au moins une "cartouche" contenant la (ou les) matière(s) active(s) que l'on veut relarguer dans l'eau.

Un autre but de la présente invention est une fontaine dans laquelle la partie de la cartouche constituant le support de la substance active peut être retirée lorsque la majeure partie de la matière active est passée (a été relarguée) dans l'eau déversée par le bec verseur de la fontaine.

Un autre but de la présente invention est une fontaine pouvant être adaptée sur les fontaines déjà existantes ou pouvant les remplacer.

Un autre but de la présente invention est une fontaine dans laquelle la "cartouche" ne risque pas d'être sèche lorsque la pompe n'est pas en fonctionnement.

Un autre but de la présente invention est une fontaine permettant de maintenir en position (ou de limiter le déplacement de) la cartouche lors du passage de l'eau soutirée du forage.

Il a donc été trouvé et c'est ce qui fait l'objet de la présente invention une fontaine permettant le relargage de substances actives dans l'eau en provenance par exemple de forages, caractérisée en ce qu'elle comprend :
– un premier compartiment (1) alimenté à sa partie supérieure (2) par l'eau soutirée du forage, cette eau ayant ainsi un mouvement descendant dans ce compartiment (1),
– un deuxième compartiment (3) dans lequel l'eau, en provenance du compartiment (1), arrive dans la partie inférieure (4) de ce compartiment (3), cette eau ayant un mouvement ascendant dans ce compartiment (3) qui comporte dans sa partie supérieure (5) un bec verseur (6) par lequel l'eau sort de la fontaine après avoir circulé au contact d'au moins une cartouche (7) disposée dans au moins un des compartiments (1) et (3), cette cartouche (7) contenant la substance active qu'on veut relarguer dans l'eau,
– des moyens pour maintenir cette cartouche (7) toujours immergée lorsque l'eau n'est pas soutirée du forage.

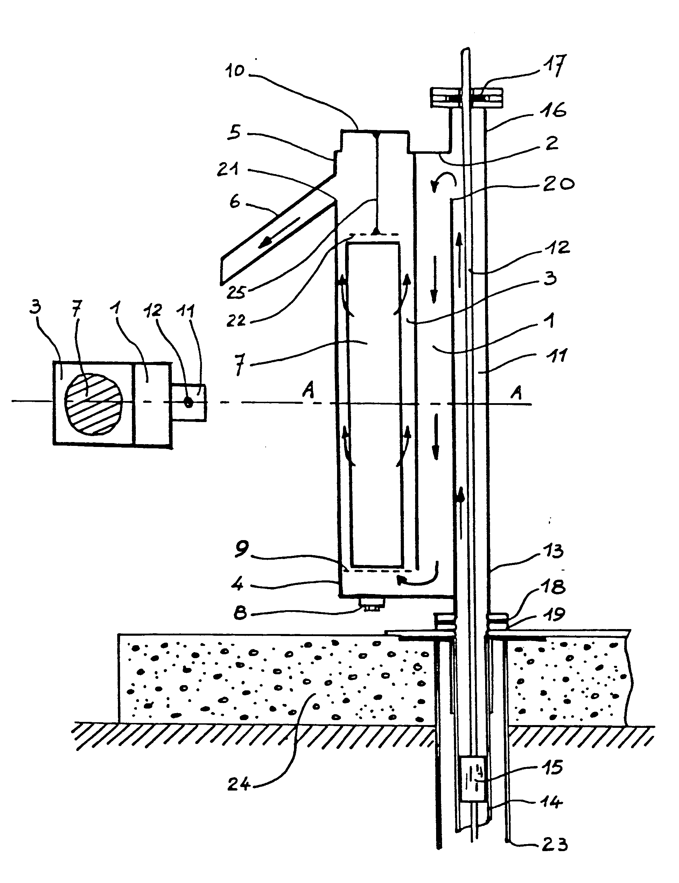

La description de la présente invention sera mieux comprise à l'aide de la figure jointe qui illustre, de façon schématique, à titre d'exemple non limitatif, un mode de réalisation préférentielle de la fontaine faisant l'objet de la présente invention. Les flèches de cette figure indiquent le sens de circulation de l'eau.

La fontaine représentée comprend un compartiment (1) alimenté à sa partie supérieure (2) par l'eau en provenance du compartiment (11) dans lequel se trouve une tige (12) ou un "train de tiges" (12) dans le prolongement les unes des autres et fixées entre elles. La tige (12) va au-delà de la partie inférieure (13) du compartiment (11), donc au delà de la fontaine, dans la colonne d'exhaure (14) située à l'intérieur du tube de forage (23) et donc dans la terre. Cette tige (12) ou ce train de tiges comprend au moins un piston (15) ou de préférence un certain nombre de pistons (15) espacés les uns des autres, ces pistons se déplaçant au contact et à l'intérieur de la colonne d'exhaure (14). Ce type de pompe autoamorçante à pistons multiples est brevetée et est distribuée par la Société FORACO. En bas de la colonne d'exhaure (14) se trouve un clapet à membrane (non représenté) empêchant, lors de la descente de la tige (12), le retour de l'eau de la colonne d'exhaure (14) à la nappe aquifère. A la partie supérieure (16) du compartiment (11) se trouvent des moyens (17) permettant d'assurer le guidage de la tige (12) et l'étanchéité à cet endroit. Ces moyens (17) sont constitués par exemple par deux brides entre lesquelles est serré un joint dans le trou central duquel circule de manière étanche la tige (12).

Les moyens pour mettre en mouvement la tige (12) ne sont pas représentés car ils ne font pas partie de la fontaine, mais l'homme de l'art concernant le domaine des pompes sait que par exemple ces moyens peuvent comprendre un mât haubané, fixé sur le socle (24) par exemple en béton, au sommet duquel se trouve une poulie dans la gorge de laquelle tourne une corde reliée à l'extrémité de la tige (12) et par exemple à un levier de pompage, dans le cas où l'extraction de l'eau se fait manuellement.

La partie inférieure (13) du compartiment (11) comprend, de façon connue, des moyens (18) permettant d'assurer l'étanchéité entre la fontaine et la tête de tubage (19) de la pompe, au niveau de la partie supérieure du socle en béton (24).

L'eau circulant dans le compartiment (1) avec un mouvement descendant passe dans la partie inférieure (4) d'un compartiment (3) dont la partie supérieure (5) comprend un bec verseur (6) par lequel l'eau sort de la fontaine. Ce compartiment (3) comprend une cartouche (7) contenant la matière active devant être relarguée dans l'eau sortant par le bec verseur (6). Ce compartiment (3) comporte dans sa partie inférieure (4) des moyens (9) pour maintenir la cartouche (7), ces moyens étant constitués par une grille ou une tôle perforée par exemple. Dans sa partie inférieure (4) ce compartiment (3) comporte de plus des moyens (8) pour vidanger ce compartiment (3), si nécessaire, ces moyens pouvant consister en un trou taraudé fermé par un bouchon de vidange (8). Dans sa partie supérieure (5) le compartiment (3) comporte un passage fermé par un bouchon (10) permettant de mettre ou d'enlever une cartouche (7) dans le compartiment (3). Ce bouchon peut comporter des moyens (22) permettant de limiter le déplacement de la cartouche (7) lors du passage ascendant de l'eau dans le compartiment (3). Ces moyens (22) peuvent consister en une grille ou tôle perforée, passant par le passage fermé par le bouchon (10), cette grille étant solidaire dudit bouchon grâce à une tige (25) et un ressort (non représenté).

Dans la fontaine décrite ci-avant l'endroit (20) où l'eau commence à passer du compartiment (11) au compartiment (1) est avantageusement sensiblement au même niveau par rapport au sol, que l'endroit (21) où l'eau commence à sortir du compartiment (3) pour aller dans le bec verseur (6). Eventuellement l'endroit (20) peut cependant être un peu plus haut, par exemple de 1 à 2 cm, que l'endroit (21) où l'eau commence à sortir du bec verseur (6).

La section AA représente schématiquement la forme de la fontaine en vue de dessus.

La fontaine décrite ci-avant peut être réalisée notamment en acier galvanisé, en aluminium ou en matière plastique, par exemple en utilisant des profilés creux du commerce que l'on découpe et soude ou colle entre eux.

Cette fontaine peut faire l'objet de nombreuses variantes. On peut par exemple introduire une cartouche (7) dans le compartiment (1) qui comprend alors un passage et un bouchon (10) et des moyens (9) pour maintenir la cartouche (7). Eventuellement cette fontaine peut comporter au moins une cartouche (7) dans chaque compartiment (1) et (3).

La fontaine telle que décrite est représentée ci-avant peut être utilisée pour équiper de nouveaux forages ou éventuellement pour remplacer des fontaines existantes qui en fait ne comportent que le compartiment (11) dans lequel se trouve la tige (12) muni d'un bec verseur dans sa partie supérieure (2).

Il doit être indiqué cependant que la fontaine selon la présente invention peut être adaptée sur les fontaines existantes qui, comme déjà dit dans le paragraphe précédent, ne comportent que le compartiment (11) et un bec verseur. Pour cela la fontaine selon la présente invention peut ne comporter que le compartiment (1) et le compartiment (3) tels que représentés sur la figure et cette fontaine s'adapte alors de manière étanche (dans la partie supérieure 2 du compartiment 1) sur le bec verseur de la fontaine existante. Bien entendu un système de fixation adéquat est prévu.

La fontaine selon la présente invention peut être utilisée pour relarguer dans l'eau de forages des substances actives permettant de pallier des carences pour l'homme, mais elle peut être utilisée pour d'autres applications. Par exemple elle peut servir à relarguer dans l'eau soutirée des forages (en introduisant dans la fontaine une cartouche appropriée) des produits phytosanitaires, cette eau étant alors utilisée sur des plantes ou légumes par exemple.

La fontaine selon la présente invention peut de même être utilisée pour relarguer dans l'eau soutirée de forage des substances actives pour le traitement des animaux (élevage).

## Revendications

1. Fontaine permettant le relargage de substances actives dans l'eau en provenance de forages, caractérisée en ce qu'elle comprend :
   – un premier compartiment (1) alimenté à sa partie supérieure (2) par l'eau soutirée du forage, cette eau ayant ainsi un mouvement descendant dans ce compartiment (1),
   – un deuxième compartiment (3) dans lequel l'eau, en provenance du compartiment (1), arrive dans la partie inférieure (4) de ce compartiment (3), cette eau ayant un mouvement ascendant dans ce compartiment (3) qui comporte dans sa partie supérieure (5) un bec verseur (6) par lequel l'eau sort de la fontaine après avoir circulé au contact d'au moins une cartouche (7) disposée dans au moins un des compartiments (1) et (3), cette cartouche (7) contenant la substance active qu'on veut relarguer dans l'eau,
   – des moyens pour maintenir cette cartouche (7) toujours immergée lorsque l'eau n'est pas soutirée du forage.

2. Fontaine selon la revendication 1, caractérisée en ce que le compartiment (3) contient une cartouche (7) et en ce qu'il comporte un bouchon de vidange (8) dans sa partie inférieure (4).

3. Fontaine selon les revendications 1 ou 2, caractérisée en ce que le compartiment (3) comporte dans sa partie inférieure (4) une grille (9) supportant la cartouche (7) dispoée dans ce compartiment (3).

4. Fontaine selon l'une quelconque des revendications 1 à 3, caractérisée en ce que le compartiment (3) comporte dans sa partie supérieure (5) un bouchon (10) amovible permettant l'introduction et le retrait de la cartouche (7).

5. Fontaine selon l'une quelconque des revendications 1 à 4, caractérisée en ce que le compartiment (3) comporte des moyens (22), dans sa partie supérieure (5), pour limiter le déplacement de la cartouche (7) lors du mouvement ascendant de l'eau dans ce compartiment (3).

6. Fontaine selon l'une quelconque des revendications 1 à 5, caractérisée en ce qu'elle comporte de plus un compartiment (11) dans lequel se déplace, lorsqu'on soutire de l'eau, une tige (12) se prolongeant au-delà de la partie inférieure (13) de ce compartiment (11) dans la colonne d'exhaure (14) et comportant au moins un piston (15), ledit compartiment (11) étant en communication dans sa partie supérieure (16) avec la partie supérieure (2) du compartiment.

7. Fontaine selon la revendication 6, caractérisée en ce que le compartiment (11) comporte de plus dans sa partie supérieure (16) des moyens (17) permettant d'assurer le guidage de la tige (12) et l'étanchéité à cet endroit.

8. Fontaine selon l'une quelconque des revendications 6 ou 7, caractérisée en ce que le compartiment (11) comporte de plus dans sa partie inférieure (13) des moyens (18) permettant d'assurer l'étanchéité entre la fontaine et la tête de tubage (19) de la pompe.

9. Fontaine selon l'une quelconque des revendications 6 à 8, caractérisée en ce que l'endroit (20) où l'eau commence à passer du compartiment (11) au compartiment (1) est au même niveau, par rapport au sol, que l'endroit (21) où l'eau commence à sortir du compartiment (3) pour aller dans le bec verseur (6).

**Patentansprüche**

1. Brunnen, der die Anreicherung von aktiven Substanzen in Bohrungen entstammendem Wasser ermöglicht, dadurch gekennzeichnet, daß er umfaßt
   – einen ersten Raum (1), der an seinem oberen Teil (2) mit der Bohrung entnommenem Wasser beschickt wird, wobei dieses Wasser demzufolge in diesem Raum (1) eine absteigende Bewegung aufweist,
   – einen zweiten Raum (3), in dem das dem Raum (1) entstammende Wasser in den unteren Teil (4) dieses Raums (3) gelangt, wobei dieses Wasser in dem Raum (3) eine aufsteigende Bewegung aufweist, welcher Raum (3) in seinem oberen Teil (5) eine Gießschnauze (6) enthält, durch die das Wasser den Brunnen verläßt, nachdem es in Kontakt mit zumindest einer Patrone (7) zirkuliert ist, welche in zumindest einem der Räume (1) und (3) angeordnet ist, wobei diese Patrone (7) die aktive Substanz enthält, die man in dem Wasser anreichern möchte,
   – Mittel um diese Patrone (7) stets eingetaucht zu halten, wenn das Wasser nicht der Bohrung entnommen wird.

2. Brunnen gemäß Anspruch 3, dadurch gekennzeichnet, daß der Raum (3) eine Patrone (7) enthält, und daß er in seinem unteren Teil (4) eine Entleerungsschraube (8) aufweist.

3. Brunnen gemäß den Ansprüchen 1 oder 2, dadurch gekennzeichnet, daß der Raum (3) in seinem unteren Teil (4) einen Rost (9) aufweist, der die in dem Raum (3) angeordnete Patrone (7) stützt.

4. Brunnen gemäß einem der Ansprüche 1 bis 3, dadurch gekennzeichnet, daß der Raum (3) in seinem oberen Teil (5) einen abnehmbaren Verschluß (10) aufweist, der das Einführen und das Abziehen der Patrone (7) ermöglicht.

5. Brunnen gemäß einem der Ansprüche 1 bis 4, dadurch gekennzeichnet, daß der Raum (3) in seinem oberen Teil (5) Mittel (22) aufweist, um die Verschiebung der Patrone (7) während der Aufwärtsbewegung des Wassers in diesem Raum (3) zu beschränken.

6. Brunnen gemäß einem der Ansprüche 1 bis 5, dadurch gekennzeichnet, daß er außerdem einen Raum (11) aufweist, in dem sich, wenn man Wasser entnimmt, ein Schaft (12) bewegt, der sich über den unteren Teil (13) dieses Raums (11) in der Säule für die Wasserhaltung (14) hinaus fortsetzt und zumindest einen Kolben (15) aufweist, wobei der Raum (11) in seinem oberen Teil (16) mit dem oberen Teil (2) des Raums kommuniziert.

7. Brunnen gemäß Anspruch 6, dadurch gekennzeichnet, daß der Raum (11) außerdem in seinem oberen Teil (16) Mittel (17) aufweist, die es ermöglichen, die Führung des Schachtes (12) und die Abdichtung an dieser Stelle sicherzustellen.

8. Brunnen gemäß einem der Ansprüche 6 oder 7, dadurch gekennzeichnet, daß der Raum (11) außerdem in seinem unteren Teil (13) Mittel (18) aufweist, die es ermöglichen, die Abdichtung zwischen dem Brunnen und dem Verrohrkopf (19) der Pumpe sicherzustellen.

9. Brunnen gemäß einem der Ansprüche 6 bis 8, dadurch gekennzeichnet, daß die Stelle (20), an der das Wasser aus dem Raum (11) in den Raum (1) zu gelangen beginnt, sich auf dem gleichen Niveau, bezogen auf den Boden, befindet wie die Stelle (21), an der das Wasser den Raum (3) zu verlassen beginnt, um in die Gießschnauze (6) zu gelangen.

**Claims**

1. Fountain permitting the release of active substances into water originating from wells, characterised in that it comprises:
   – a first compartment (1) fed in its upper part (2) by water drawn from the well, this water thus having a downward movement in this compartment (1),
   – a second compartment (3) in which the water, coming from the compartment (1) arrives in the lower part (4) of the said compartment (3), this water having an upward movement in this compartment (3) which possesses, in its upper part (5) a pouring spout (6) via which the water emerges from the fountain having circulated in contact with at least one cartridge (7) arranged in at least one of the compartments (1) and (3), this cartridge (7) containing the active substance which it is desired to release into the water,
   – means for keeping this cartridge (7) permanently immersed when the water is not being drawn from the well.

2. Fountain according to claim 1, characterised in that the compartment (3) contains a cartridge (7) and in that it possesses a drain plug (8) in its lower part (4).

3. Fountain according to claim 1 or 2, characterised in that the compartment (3) possesses in its lower part (4) a grid (9) supporting the cartridge (7) arranged in the said compartment (3).

4. Fountain according to any one of claims 1 to 3, characterised in that the compartment (3) possesses in its upper part (5) a removable plug (10) permitting the introduction and the withdrawal of the cartridge (7).

5. Fountain according to any one of claims 1 to 4, characterised in that the compartment (3) possesses means (22), in its upper part (5), for limiting the displacement of the cartridge (7) during the upward movement of the water in the said compartment (3).

6. Fountain according to any one of claims 1 to 5, characterised in that it further possesses a compartment (11) in which, when water is drawn, a rod (12) moves which extends beyond the lower part (13) of the said compartment (11) into the raising column (14) and possesses at least one piston (15), the said compartment (11) being in communication in its upper part (16) with the upper part (2) of the compartment.

7. Fountain according to Claim 6, characterised in that the compartment (11) further possesses in its upper part (16) means (17) making it possible to ensure the guiding of the rod (12) and the seal at that point.

8. Fountain according to either of claims 6 or 7, characterised in that the compartment (11) additionally possesses in its lower part (13) means (18) making it possible to ensure a seal between the fountain and the casing head (19) of the pump.

9. Fountain according to any one of claims 6 to 8, characterised in that the point (20) where the water begins to pass from the compartment (11) to the compartment (1) is at the same level, relative to the ground, as the point (21) where the water begins to emerge from the compartment (3) to enter the pouring spout (6).